(19) Europäisches Patentamt
European Patent Office
Office européen des brevets

(11) **EP 2 594 800 A1**

(12) **EUROPEAN PATENT APPLICATION**
published in accordance with Art. 153(4) EPC

(43) Date of publication:
**22.05.2013 Bulletin 2013/21**

(51) Int Cl.:
**F04D 13/02** *(2006.01)*

(21) Application number: **11806713.1**

(22) Date of filing: **08.07.2011**

(86) International application number:
**PCT/JP2011/065712**

(87) International publication number:
**WO 2012/008383 (19.01.2012 Gazette 2012/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2010 JP 2010238164**
**12.07.2010 JP 2010157731**

(71) Applicant: **Tohoku University**
**Aoba-ku**
**Sendai-shi**
**Miyagi 980-8577 (JP)**

(72) Inventors:
• **ISHIYAMA Kazushi**
**Sendai-shi**
**Miyagi 980-8577 (JP)**

• **YAMBE Tomoyuki**
**Sendai-shi**
**Miyagi 980-8577 (JP)**
• **SHIRAISHI Yasuyuki**
**Sendai-shi**
**Miyagi 980-8577 (JP)**
• **MIURA Hidekazu**
**Sendai-shi**
**Miyagi 980-8577 (JP)**

(74) Representative: **WSL Patentanwälte**
**Partnerschaftsgesellschaft**
**Kaiser-Friedrich-Ring 98**
**65185 Wiesbaden (DE)**

(54) **MAGNETIC PUMP**

(57) Disclosed is a magnetic pump such that it is possible to wirelessly monitor and control the operating state of a pump from a location separated from the pump. Specifically disclosed is a magnetic pump provided with: a pump main body equipped with a pump case having an inlet and an outlet, and an impeller stored within the pump case in a rotatable manner and linked to a magnetic means; a rotating magnetic field generating means separated from the pump main body and for imparting a rotating magnetic field to the magnetic means; and a means for detecting the potential difference between the rotating magnetic field and the magnetic field produced by the magnetic means and imparted outward.

Fig.8

VOLTAGE GENERATED BY AN EXTERNAL ROTATING MAGNETIC FIELD

VOLTAGE GENERATED BY ROTATION OF A BUILT-IN MAGNET

VOLTAGE DETECTED BY A DETECTION COIL

**Description**

{TECHNICAL FIELD}

The present invention relates to a magnetic pump.

{BACKGROUND ART}

Extensive research has been conducted into pumps intended for various applications. Additionally, the development of new materials, as well as progress in micro- and nano-structure production technologies, have led to the development of small-scale pumps of various types. However, substantially all of these small-scale pumps are controlled by an electrical cable or battery.

In recent years, magnetic pumps provided with external magnetic field control have been introduced in order to solve this problem (see Non-patent Document 1). Magnetic pumps have attracted attention due to their important role in pharmaceutical delivery and uTAS.

Pumps for medical applications are classified into three types according to operating mechanism: centrifugal pumps, axial flow pumps, and pulsatile pumps. Blood pumps are further classified into two types: pulsed flow pumps and continuous flow (rotary) pumps.

Continuous flow (rotary) pumps have been developed for use as blood pumps in recent years (see Patent Document 1, Non-patent Documents 2 to 4). Pulsed flow pumps, being of valve design, are expensive and very heavy, have low efficiency, are difficult to control, and have high power consumption and low productivity, whereas continuous flow (rotary) pumps have various advantages. Continuous flow (rotary) pumps, lacking valves, are inexpensive, small in scale, and lightweight, as well as being simple to control, and have low power consumption and high productivity.

In a conventional continuous flow (rotary) pump, in cases in which the operating state of the pump is to be monitored, it is necessary to furnish the flow path with a pressure gauge or flow meter. This requires placing an extra device in proximity to the pump, as well as extra wiring for this purpose. Particularly in the case of a blood pump for implantation in the body, this is a significant obstacle to practical application.

{CITATION LIST}

{Patent Literature}

Patent Document 1: JP 7-75667 AI

{Non-Patent Literatures}

Non-patent Document 1: A. Yamazaki, M. Sendoh, K. Ishiyama, K. I Arai, and T. Hayase (2003), IEEE Trans. on Magnetics, 39, 5
Non-patent Document 2: T. Yamane (2002), J. Artif. Organs, 5, 149-155
Non-patent Document 3: Jarvik, R. K. (1995), Artif. Organs, 19, 565-570
Non-patent Document 4: Masuzawa, T., Kita, T., Okada, Y. (2001), Artif. Organs, 25, 395-399

{SUMMARY OF INVENTION}

{Technical Problem}

It is an object of the present invention to solve the problems encountered in continuous flow (rotary) pumps of the prior art, and provide a magnetic pump in which operating conditions of the pump body can be monitored and controlled wirelessly, from a location away from the pump body.

{Solution to Problem}

In order to solve the aforementioned problems, the present invention provides the following magnetic pump.

(1) A magnetic pump, provided with: a pump body provided with a pump casing having an inlet and an outlet, and an impeller rotatably housed within the pump casing, and linked to a magnetic means; a rotating magnetic field generating means separate from the pump body, and adapted for imparting a rotating magnetic field to the magnetic means; and means for detecting a phase difference between the rotating magnetic field and a magnetic field produced outward by the magnetic means.

(2) The magnetic pump according to (1), characterized in that the means for detecting a phase difference detects a phase difference between a voltage arising from rotation of the magnetic means and a voltage arising from the rotating magnetic field, and monitors an output of the pump on the basis of the phase difference.

(3) The magnetic pump according to (1) or (2), characterized in that the means for detecting a phase difference includes a detection coil for detecting the voltage arising from rotation of the rotating magnetic field and of the magnetic means; calculates the voltage arising from rotation of the magnetic means, using the difference in a known voltage arising from rotation of the rotating magnetic field with respect to the voltage detected by the detection coil; and detects the phase difference with respect to the known voltage arising from the rotating magnetic field.

(4) The magnetic pump according to (3), characterized in that the detection coil is furnished at a location away from the pump body.

(5) The magnetic pump according to any of (1) to (4), characterized in that the rotating magnetic field generating means is a plurality of fixed coils.

(6) The magnetic pump according to any of (1) to (5), characterized in that the impeller is a multistage impeller.

(7) The magnetic pump according to any of (1) to (6), characterized in that the pump is a blood pump.

(8) The magnetic pump according to any of (1) to (7), characterized in that the magnetic means is a permanent magnet.

{Advantageous Effects of Invention}

The present invention makes possible a magnetic pump in which the pump can be driven wirelessly, and the operating conditions of the pump body can be monitored and controlled wirelessly, from a location distant from the pump body.

In particular, the magnetic pump according to the present invention makes a significant contribution to the practical application of a blood pump for implantation in the body, which is required to be inexpensive, small in scale, and lightweight, as well as being simple to control, and having low power consumption.

{BRIEF DESCRIPTION OF DRAWINGS}

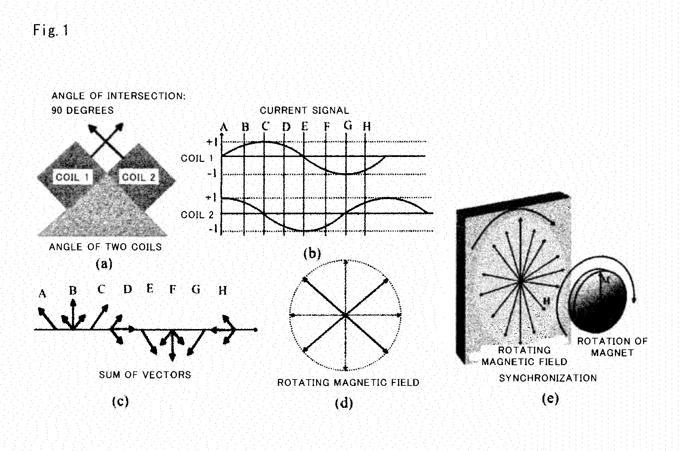

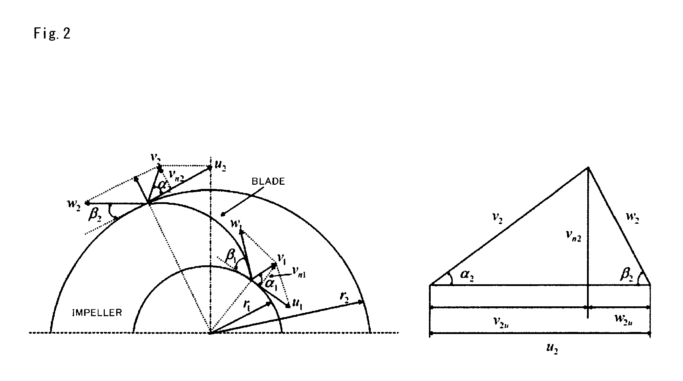

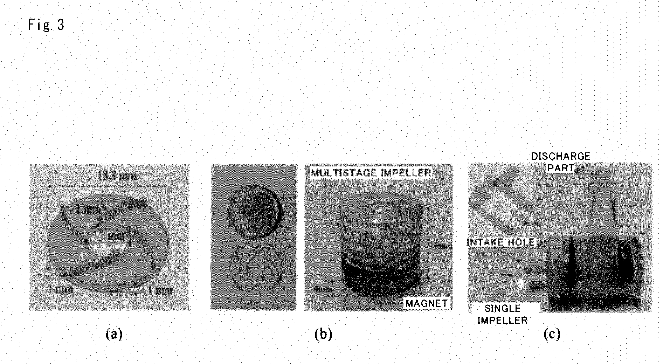

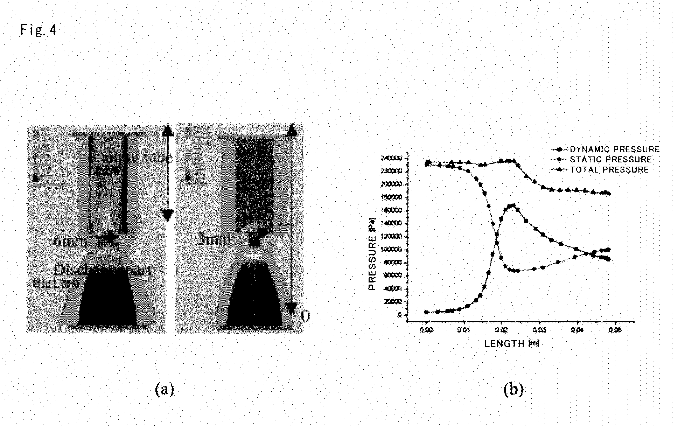

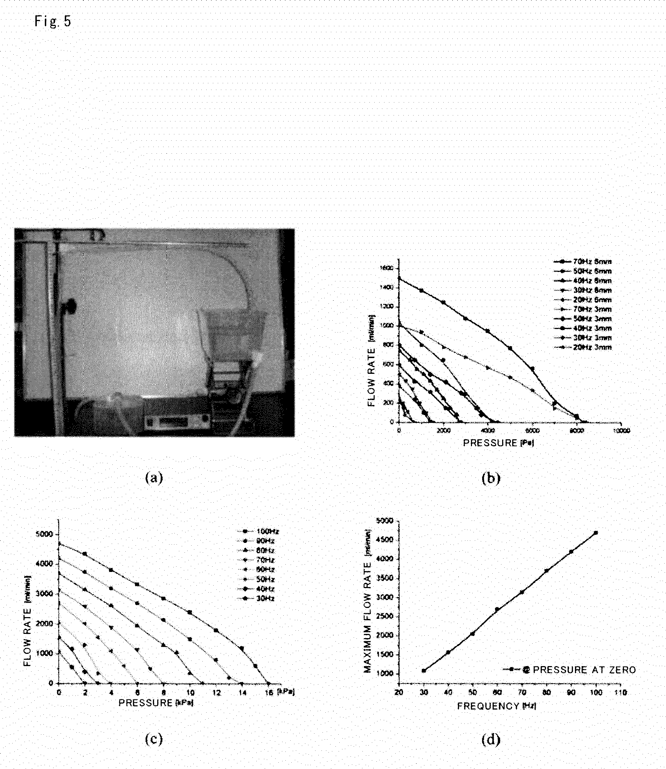

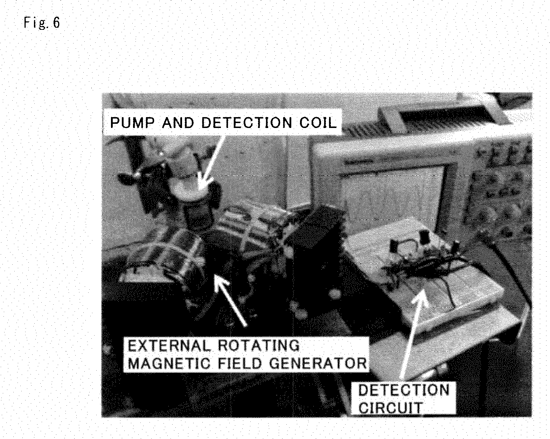

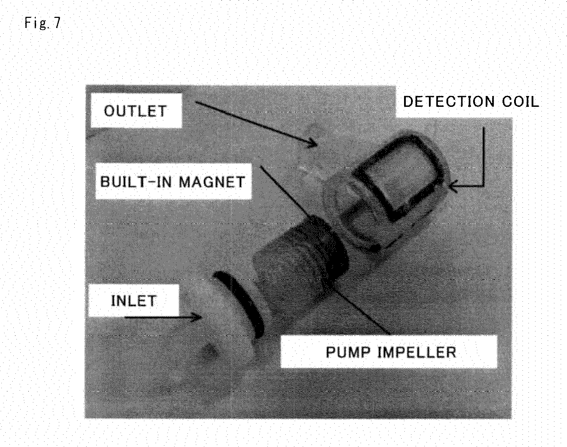

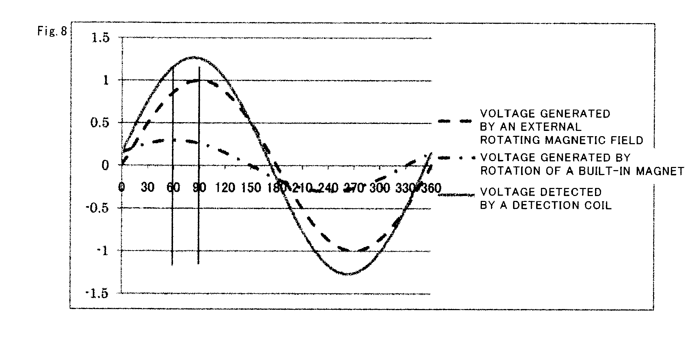

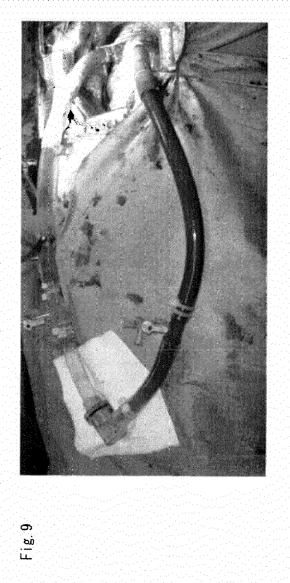

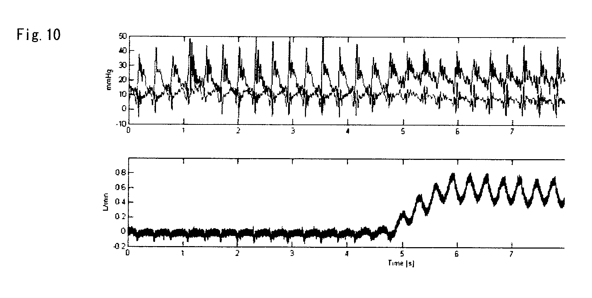

{FIG. 1} is a diagram showing generation of a rotating magnetic field and a driving method;
{FIG. 2} is a hodograph of inflow and outflow of an impeller;
{FIG. 3} is a diagram showing design and manufacture of a pump body;
{FIG. 4} is a diagram showing a flow dynamic simulation of a discharge part;
{FIG. 5} is a diagram showing the relationship of flow rate and pressure;
{FIG. 6} is a photograph of an experimental setup; {FIG. 7} is an exploded perspective view of a pump body;
{FIG. 8} shows a voltage waveform detected by a detector coil;
{FIG. 9} is a photograph of a right heart assist device for extracorporeal driving, as needed, during an animal experiment; and
{FIG. 10} shows time series curves of right heart assistive effect during the animal experiment.

{DESCRIPTION OF EMBODIMENTS}

{Basic principle of operating mechanism}

A magnetic pump is driven by a rotating magnetic field. Magnetic torque is the essential energy supply. An NdFeB permanent magnet on the rotor is synchronized to a rotating magnetic field. The rotation velocity fluctuates, depending on the frequency of the magnetic field.

FIG. 1 shows the basic principle of a rotating magnetic field and the basic principle of a synchronous state within a rotating magnetic field. As shown in FIG. 1 (a), in order to generate a uniform rotating magnetic field, the angle of intersection of a coil 1 and a coil 2 is set to 90°. It will be appreciated from FIG. 1 (b) that the phase difference of the input current signals is 90°.

In this state, a rotating magnetic field is generated as the sum of the vectors shown in FIG. 1 (c) and (d). The magnetic torque between the rotating magnetic field and the magnetic moment of the NdFeB permanent magnet can be represented as follows:

$$T = mH \sin\theta \quad \{Nm\} \qquad (1)$$

(m is the magnetic moment of the magnet, H is the rotating magnetic field, and $\theta$ is the angle between m and H).

{Fundamental theory of a centrifugal pump and an impeller}

A centrifugal pump relies on the basic principles of angular momentum theory and moment of momentum. Specifically, a centrifugal pump converts energy from kinetic energy to pressure energy. The amount of energy exerted on a liquid is proportional to the velocity at the edge or blade tip of the impeller. FIG. 2 shows the velocity at the edge or blade of a single impeller. In FIG. 2, w is the relative velocity of particles of a liquid, v is the absolute velocity of particles of a liquid, u is the peripheral velocity, r is the radius, $\alpha$ is the angle between u and v, and $\beta$ is the angle of the blade. The characteristics of an impeller and a pump vary depending on the blade shape, which is determined by the blade angle $\beta_2$.

According to angular momentum theory, torque $T_{torque}$ and power $P_{power}$ can be represented as follows:

$$T_{torque} = \rho Q \ (r_2 v_2 \cos\alpha_2 - r_1 v_1 \cos\alpha_1) \quad (2)$$

$$P_{power} = T_{torque} \times \omega = \rho g Q H_p$$

$$= \rho Q \ (u_2 v_2 \cos\alpha_2 - u_1 v_1 \cos\alpha_1) \quad (3)$$

In the aforementioned equations, $\rho$ is the fluid density, Q is the quantity of flowing liquid, $H_p$ is the pump head, g is gravity, and $\omega$ is the angular velocity.

For the purpose of acquiring the actual pump head, an angle ($\alpha_1 = 90°$) is assumed. In this case, the pump head ($H_p$) can be represented as follows:

$$H_p = 1/g \ u_2 v_2 \cos\alpha_2 \qquad (4)$$

In order to analyze the effect of the blade angle ($\beta_2$), equation (4) is transformed by $\beta_2$, and then $\alpha_2$ is transformed by $V_{2u}$ as shown in FIG. 2. The pump head ($H_p$) can be rewritten as follows:

$$H_p = 1/g \ (u_2^2 - u_2 v_{n2} \cot\beta_2) \qquad (5)$$

At constant rotation speed, the pump head fluctuates depending on the angle ($\beta_2$), in accordance with the following three preconditions.

   1. $\beta_2 > 90°$: when $\cot\beta_2 < 0$ and $v_{n2} \cot\beta_2 < 0$, the head increases in accordance with decreasing flow rate.
   2. $\beta_2 = 90°$: when $\cot\beta_2 = 0$ and $v_{n2} \cot\beta_2 = 0$, the head is a constant value, irrespective of the flow rate.
   3. $\beta_2 < 90°$: when $\cot\beta_2 > 0$ and $v_{n2} \cot\beta_2 > 0$, the head decreases in accordance with increasing flow rate.

{Design and fundamental characteristics of pump body}

The pump body of the magnetic pump according to the present invention includes a multistage impeller and an NdFeB permanent magnet (diameter: 18.8 mm, thickness: 4 mm). Because the impeller is of floating design, the pump casing requires no rotating shaft or bearing. Common mechanical problems are eliminated thereby. A magnetic pump has a number of advantages in medical applications. These include a simpler construction with no mechanical problems, by virtue of a wireless design without the need for a battery; and the fact that no heat whatsoever is generated. The fundamental characteristics of a magnetic pump vary depending on the magnetic field and the operating frequency.

The intersection point and magnetic field density of two coils determine the distance between the pump body and the drive coils. The discharge pressure can be adjusted at this time, through the frequency. In the case of a vibrating flow pump, pressure fluctuates depending on the resonance frequency. In a centrifugal pump, however, up to the saturation point, pressure is proportional to operating frequency. The pump body of the present invention can rotate in either of two directions, in accordance with the rotation direction of the rotating magnetic field (counterclockwise or clockwise). The flow rate and pressure in this case will be determined by equation (5). When the rotation direction is counterclockwise, the blade angle ($\beta_2$) formed on the impeller is less than 90°. However, when the rotation direction is clockwise, the blade angle ($\beta_2$) is greater than 90°.

FIG. 3 shows the assembled impeller and pump body. In FIG. 3, (a) shows the impeller in 3D, (b) shows a multistage impeller provided with a disk type NdFeB permanent magnet constituting the rotor, and (c) shows the completely installed pump body, respectively.

Measured values of a single impeller were taken at 1 mm, with a 0.2 mm gap between the rotor and the inner wall of the pump casing. Because the rotor is of floating design, this space is important in terms of determining starting torque. The flow rate and the dynamic pressure are determined by the diameter of the discharge part. For example, with a smaller diameter, it is possible to increase the dynamic pressure, but the flow rate will drop at a constant rpm value.

FIG. 4 is a drawing showing a flow dynamic simulation of the discharge part on the pump casing. In FIG. 4, (a) shows the pressure distribution across the diameter (6 mm and 3 mm) of the discharge part, and (b) shows pressure measurement results (dynamic pressure, static pressure, and total pressure: discharge part 6 mm), respectively. An optimal size for the discharge part can be designed through flow dynamic simulations.

{Experimental Results}

The inventors fabricated a magnetic pump. The design thereof comprised a pump body, drive coils, and a power supply. As mentioned previously, the distance between the pump body and the drive coils is determined by the angle at the intersection point of the drive coils.

This experiment was carried out with the angle at the intersection point of the drive coils set to 90°. The phase difference of the current signals of the two drive coils was fixed at 90°. The operating frequency for driving the magnetic rotor was 10 Hz to 100 Hz (rpm: ≤6,000 rpm). For this experiment, two types of pump casing (having outflow diameter of 3 mm and 6 mm), and tubes of 6 mm, 8 mm, and 10 mm, were employed. The characteristics of the magnet (size, magnetic moment) on the rotor are important factors within the rotating magnetic field, as these generate the torque.

FIG. 5 (b) to (d) show various characteristics of the magnetic pump. In FIG. 5, (a) shows a test bed for circulation purposes, (b) shows a comparison of discharge parts (6 mm and 3 mm diameter), (c) shows the relationship of flow rate and pressure (for a 6 mm discharge part and a 10 mm output tube), and (d) shows change in flow rate at increasing frequencies, respectively.

Firstly, the relationship of flow rate and pressure is an inversely proportional relationship.

Secondly, flow rate and pressure are proportional to operating frequency (rpm).

However, the impedance on the coils fluctuates depending on the frequency. Ultimately, increase of the operating frequency gives rise to a decline in the driving current. Finally, the flow rate and pressure are determined by the size of the discharge part, together with the operating frequency. Flow rate and pressure were compared for discharge parts of 3 mm and 6 mm. In this case, the pressure difference was 400 Pa, and as shown in FIG. 5 (b), when the output tube diameter was 6 mm, the flow rate was 500 mL/min at 70 Hz. However, as shown in FIG. 5 (c), with a 6 mm discharge part and a 10 mm output tube, while the flow rate was high (3,200 mL/min at 70 Hz and 4,800 mL/min at 100 Hz), the pressure declined to a maximum of 200 Pa.

{Monitoring the Operating State}

The procedure for monitoring the operating state of the magnetic pump according to the present invention is described.

During operation of the magnetic pump, two types of magnetic field exist in proximity to the detection coil. Specifically, these are the rotating magnetic field produced outward due to rotation of the built-in magnet serving as the magnetic means, and the magnetic field generated by the built-in magnet.

During this process, the magnetic field that is produced outward by the magnet in association with rotation of the built-in magnet rotates as well, and therefore by disposing the detection coil at an appropriate location, induced electromotive force arises in the coil, and alternating current voltage proportional to the rotation frequency and the magnetic field intensity is generated at both ends of the coil. Rotation of the built-in magnet can then be monitored from the voltage waveform at both ends of the detection coil.

The detection coil is placed at a location where it can efficiently detect the magnetic field generated by the built-in magnet, and at the same time, detects the rotating magnetic field exerted from the outside as well. However, there is a phase difference between these two magnetic fields, and measurement of this phase difference in and of itself constitutes important information for ascertaining the rotation behavior of the built-in magnet.

The pump operates as a pump by virtue of imparting force on a nearby fluid. This is equivalent to the load on the motor. From the basic principle of magnetic torque, the torque and the angle difference of the orientation of the magnetic field exerted from the outside and of the magnetization of the magnet are proportional, and therefore, in the case of this pump, the magnet always has somewhat of a phase lag with respect to the rotating magnetic field, while rotating at the same rotation speed. The quantity of this phase lag is proportional to the magnitude of the torque acting between the rotating magnetic field and the magnet, and this is specifically proportional to the output torque of the pump.

The extent of the phase lag at which the built-in magnet rotates with respect to the rotating magnetic field may be detected from the phase difference of the rotating magnetic field and the magnetic field produced outward by the built-in magnet. Where these two magnetic fields are observed simultaneously by a single detection coil, because the phase of the external rotating magnetic field is known, the phase difference of the rotating magnetic field and the built-in magnet can be ascertained.

The torque can then be calculated on the basis of this phase difference, so that the pump output can be monitored. Specifically, the phase difference is larger in the case of higher pump output, whereas the phase difference is smaller in the case of lower pump output. In specific terms, when the phase difference is zero, the term $\theta$ in the aforementioned equation (1) is zero and torque becomes zero; this is equivalent to a case of rotation at no load (zero output). The phase changes in association with increasing load (increasing output), with the torque reaching the maximum in the case of a 90 degree phase, at which point the output reaches the maximum output of the pump. Accordingly, the instantaneous output ratio with respect to the maximum output of the pump can be monitored in real time, through phase measurement.

Naturally, the detection coil is disposed at a location away from the pump body.

For example, where the pump is employed in an artificial heart application, the detection coil would be disposed outside the body, so that the operation of the pump body inside the body can be monitored. Employing this basic principle, it is possible to build a so-called feedback system in which, in the event that of a sudden change to a high load, for example, the intensity of the external rotating magnetic field increases immediately to compensate.

{Experimental Demonstration of Basic Principle}

In order to experimentally demonstrate the aforementioned basic principle, a detection coil was closely attached about the pump casing, and an external rotating magnetic field was applied to the pump by two intersecting coils while observing the output voltage of the detection coil. FIG. 6 shows a photograph of the experimental setup. FIG. 7 is an exploded perspective view of the pump body. The detection coil has been arranged on the surface of the pump casing. FIG. 8 shows the voltage waveform detected by the detector coil, as a solid line. Because the detector coil simultaneously measures two magnetic fields, the waveform shown by the solid line in FIG. 8 is observed.

Meanwhile, because the external rotating magnetic field is known, the waveform shown by the broken line can be prepared in advance. The voltage waveform arising from rotation of the built-in magnet, shown by the single dot-and-dash line, can then be calculated from the difference of these two waveforms.

Thereafter, measuring the phase difference of the two waveforms shown by the broken line and the single dot-and-dash line gives the pump output. In FIG. 8, the broken line reaches maximum at 90 degrees, whereas the single dot-and-dash line reaches maximum at 60 degrees, leading to the existence of a phase difference of 30 degrees. As the load changes, the phase difference changes as well, bringing about parallel movement of the single dot-and-dash line to left or right in the drawing.

{Animal Experiment}

An animal experiment was carried out in order to experimentally demonstrate the effect of the magnetic pump of the present invention.

FIG. 9 is a photograph of a right heart assist device for extracorporeal driving, as needed, during an animal experiment. A bypass circuit leading from the right ventricle to the pulmonary artery is implanted, and a permanent magnet joined to an impeller is employed to generate drive force. The impeller for subcutaneous implantation has been installed within the bypass circuit from the right ventricle to the pulmonary artery. Because this bypass circuit is subcutaneously implanted thereafter, full, sterile implantation is achieved.

FIG. 10 shows time series curves of right heart assistive effect in the animal experiment, by the assisted circulation device which can be driven from outside the body. From the top, pump outflow-side pressure, inflow-side pressure, and pump flow rate are shown. It will be appreciated that once driving was initiated, the pump flow rate increased, representing right heart assistive effect.

While this animal experiment was carried out to assist the right heart, the device can be implemented to assist left heart as well.

While the present invention has been described herein taking the example of a blood pump, the present invention is not limited to the blood pump cited herein by way of an embodiment, and can be applied in all manner of magnetic pumps. The present invention is implementable, for example, in a case in which a pump body placed to the other side of a wall is to be driven from the near side of the wall.

Specifically, this would be particularly effective in cases in which it is undesirable to place the drive source to the other side of a wall, such as when the other side of the wall is in a high-temperature, low-temperature, vacuum, or highly radioactive state, or in a sterile state.

The present invention is moreover effective in a case in which a pump body disposed in a confined site such as in a tube or pipe is to be driven from the outside.

**Claims**

1. A magnetic pump, provided with: a pump body provided with a pump casing having an inlet and an outlet, and an impeller rotatably housed within the pump casing, and linked to magnetic means; a rotating magnetic field generating means separate from the pump body, and adapted for imparting a rotating magnetic field to the magnetic means; and means for detecting a phase difference between said rotating magnetic field and a magnetic field produced outward by said magnetic means.

2. The magnetic pump according to claim 1, **characterized in that** said means for detecting a phase difference detects a phase difference between a voltage arising from rotation of said magnetic means and a voltage arising from said rotating magnetic field, and monitors an output of the pump on the basis of the phase difference.

3. The magnetic pump according to claim 1 or 2, **characterized in that** said means for detecting a phase difference includes a detection coil for detecting the voltage arising from rotation of said rotating magnetic field and of said magnetic means; calculates the voltage arising from rotation of said magnetic means, using the difference in a known voltage arising from rotation of the rotating magnetic field, with respect to the voltage detected by the detection coil; and detects the phase difference with respect to the known voltage arising from the rotating magnetic field.

4. The magnetic pump according to claim 3, **characterized in that** the detection coil is furnished at a location away from the pump body.

5. The magnetic pump according to any of claims 1 to 4, **characterized in that** said rotating magnetic field generating means is a plurality of fixed coils.

6. The magnetic pump according to any of claims 1 to 5, **characterized in that** said impeller is a multistage impeller.

7. The magnetic pump according to any of claims 1 to 6, **characterized in that** said pump is a blood pump.

8. The magnetic pump according to any of claims 1 to 7, **characterized in that** said magnetic means is a permanent magnet.

Fig. 1

Fig. 2

EP 2 594 800 A1

Fig. 2

Fig. 3

Fig. 4

(a)

(b)

EP 2 594 800 A1

**Fig. 5**

(a)

(b)

(c)

(d)

12

Fig. 6

Fig. 7

OUTLET

DETECTION COIL

BUILT-IN MAGNET

INLET

PUMP IMPELLER

Fig. 8

VOLTAGE GENERATED
BY AN EXTERNAL
ROTATING MAGNETIC FIELD

VOLTAGE GENERATED BY
ROTATION OF A BUILT-IN MAGNET

VOLTAGE DETECTED
BY A DETECTION COIL

Fig. 9

Fig. 10

EP 2 594 800 A1

## INTERNATIONAL SEARCH REPORT

| | International application No. |
|---|---|
| | PCT/JP2011/065712 |

A. CLASSIFICATION OF SUBJECT MATTER
*F04D13/02*(2006.01)i

According to International Patent Classification (IPC) or to both national classification and IPC

B. FIELDS SEARCHED

Minimum documentation searched (classification system followed by classification symbols)
F04D13/02

Documentation searched other than minimum documentation to the extent that such documents are included in the fields searched

| Jitsuyo Shinan Koho | 1922-1996 | Jitsuyo Shinan Toroku Koho | 1996-2011 |
|---|---|---|---|
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 5-68709 A (Terumo Corp.), 23 March 1993 (23.03.1993), paragraphs [0016], [0029], [0037] to [0038]; fig. 1, 4 to 5 (Family: none) | 1-8 |
| Y | JP 2000-166294 A (Topre Co., Ltd.), 16 June 2000 (16.06.2000), paragraph [0040] (Family: none) | 1-8 |
| Y | JP 2007-49862 A (Hitachi, Ltd.), 22 February 2007 (22.02.2007), paragraphs [0057], [0069] to [0076]; fig. 3 to 4 (Family: none) | 1-8 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 August, 2011 (03.08.11) | 23 August, 2011 (23.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

18

**INTERNATIONAL SEARCH REPORT**

<table>
<tr><td colspan="2">International application No.</td></tr>
<tr><td colspan="2">PCT/JP2011/065712</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 8-186973 A  (Nippon Seiki Co., Ltd.),<br>16 July 1996 (16.07.1996),<br>paragraphs [0023] to [0024]; fig. 5, 10<br>(Family: none) | 5-8 |
| Y | Microfilm of the specification and drawings annexed to the request of Japanese Utility Model Application No. 190318/1987(Laid-open No. 95573/1989)<br>(Kokusan Denki Co., Ltd.),<br>23 June 1989 (23.06.1989),<br>fig. 2, 8<br>(Family: none) | 5-8 |
| A | JP 2001-178816 A  (Softronics Co., Ltd.),<br>03 July 2001 (03.07.2001),<br>fig. 1 to 2<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7075667 A1

**Non-patent literature cited in the description**

- **A. YAMAZAKI ; M. SENDOH ; K. ISHIYAMA ; K. I ARAI ; T. HAYASE.** *IEEE Trans. on Magnetics,* 2003, vol. 39, 5
- **T. YAMANE.** *J. Artif. Organs,* 2002, vol. 5, 149-155
- **JARVIK, R. K.** *Artif. Organs,* 1995, vol. 19, 565-570
- **MASUZAWA, T. ; KITA, T. ; OKADA, Y.** *Artif. Organs,* 2001, vol. 25, 395-399